# EUROPEAN PATENT APPLICATION

(11) **EP 2 876 889 A1**
(43) Date of publication of application: **27.05.2015**
(21) Application number: 13306616.7
(22) Date of filing: 26.11.2013
(51) Int. Cl.: H04N 21/6547

(54) **Method and apparatus for managing operating parameters for a display device**

(71) Applicant: Thomson Licensing, 92130 Issy-les-Moulineaux (FR)
(72) Inventor: Arrighetti, Walter, 00156 Roma (IT)
(74) Representative: Schmidt-Uhlig, Thomas

(57) **Abstract**

A method and an apparatus (20) for determining operating parameters for a display device (21) are described. A display device identification unit (22) determines (10) an identifier for the display device (21), whereas a content identification unit (23) determines (11) an identifier for content to be displayed. The determined identifiers are sent (12) to a service provider, who retrieves (43) a parameter profile for the display device (21) and a parameter profile for the content to be displayed from a profile database (53). Operating parameters for the display device (21) are determined (44) from the retrieved parameter profiles, which are received (14) by the apparatus (20) and used for adapting the operating settings of the display device (21).

## Description

### FIELD OF THE INVENTION

The invention relates to a solution for managing operating parameters for a display device. More specifically, a method for retrieving operating parameters for a display device and an apparatus implementing such a method are described. Furthermore, a method for providing operating parameters for a display device and an apparatus implementing such a method are disclosed.

### BACKGROUND OF THE INVENTION

Entertainment service providers today offer a broad range of services to their clients, i.e. the producers and/or owners of video assets. These service include storage farms (SAN: Storage Area Network), data centers, production networks, post-production and VFX services, content distribution networks (CDN), and even the distribution and home entertainment technologies offered with products like set-top boxes, media access gateways, modems and tablets, which ultimately present multimedia content to several display technologies.

One important problem encountered by entertainment service providers is color reproduction and consistency during handling, processing, and distribution of the video assets. While it is still feasible to ensure color consistency as long as the video assets are in the hands of the service providers, this is no longer the case once they are distributed to the consumers. Especially, how a distributed video asset looks like on the display device of a consumer is out of control of the service provider, as this is influenced, inter alia, by the settings of the display device as well as by lighting conditions and other environmental conditions at the location of the display device.

In this regard WO 2012/012489 A2 discloses a display management server, which receives display information from a remote display. The display information comprises display characteristics, ambient conditions, and individual display settings. Based on this information the display management server generates a modified video asset adapted to the specific display, which is then distributed to the consumer. This solution requires an enormous amount of processing power at the side of the display management server, as the modified video assets need to be generated in real-time.

As an alternative solution, WO 2009/002324 A1 discloses a method for providing display device specific video assets to a display over a network architecture. Multiple versions of a video asset are stored in a server, which correspond to different display models. The multiple versions are adapted to the display models with regard to color gamut, brightness, etc. When a user requests a video asset from the server, the version adapted to the user's display device is transmitted. This solution requires a large amount of storage space at the side of the server.

### SUMMARY OF THE INVENTION

It is thus an object of the present invention to propose an improved solution for managing operating parameters for a display device.

According to a first aspect of the invention, a method for determining operating parameters for a display device comprises the steps of:
- determining an identifier for the display device;
- determining an identifier for content to be displayed;
- sending the determined identifiers to a service provider; and
- receiving operating parameters for the display device from the service provider.

Accordingly, an apparatus configured to determine operating parameters for a display device comprises:
- a display device identification unit configured to determine an identifier for the display device;
- a content identification unit configured to determine an identifier for content to be displayed;
- an output configured to send the determined identifiers to a service provider; and
- an input configured to receive operating parameters for the display device from the service provider.

Similarly, a computer readable storage medium has stored therein instructions enabling determining operating parameters for a display device, which when executed by a computer, cause the computer to:
- determine an identifier for the display device;
- determine an identifier for content to be displayed;
- send the determined identifiers to a service provider; and
- receive operating parameters for the display device from the service provider.

According to a further aspect of the invention, a method for providing operating parameters for a display device comprises the steps of:
- receiving an identifier for the display device (21) from a connected device;
- receiving an identifier for content to be displayed from the connected device;
- retrieving a parameter profile for the display device and a parameter profile for the content to be displayed from a profile database;
- determining operating parameters for the display device from the retrieved parameter profiles; and
- sending the determined operating parameters to the connected device.

Accordingly, an apparatus configured to provide operating parameters for a display device comprises:
- an input configured to receive an identifier for the display device and to receive an identifier for content to be displayed from a connected device;
- a database interface configured to retrieve a parameter profile for the display device and a parameter profile for the content to be displayed from a profile database;
- a parameter determining unit configured to determine operating parameters for the display device from the retrieved parameter profiles; and
- an output configured to send the determined operating parameters to the connected device.

Similarly, a computer readable storage medium has stored therein instructions enabling providing operating parameters for a display device, which, when executed by a computer, cause the computer to:
- receive an identifier for the display device from a connected device;
- receive an identifier for content to be displayed from the connected device;
- retrieve a parameter profile for the display device and a parameter profile for the content to be displayed from a profile database;
- determine operating parameters for the display device from the retrieved parameter profiles; and
- send the determined operating parameters to the connected device.

An idea of the present invention is to offer a consumer the option to view a video asset, e.g. a movie, essentially with the look and feel as intended by the owner or creator of the video asset. For this purpose an identifier of the display device and a content identifier are sent to a service provider, which in response returns the required operating parameters for the specific display device, favorably at least the color settings. Based on the received operating parameters the operating settings of the display device are then automatically adapted. Alternatively, a user is instructed to adapt the operating settings of the display device.

Advantageously, the identifier for the display device is determined from a model ID of the display device, from a graphical identifier affixed to the display device, or from a value specified by a user. In the easiest case the identifier is provided by the user. However, a more convenient solution consists in taking a picture from the model ID or from an affixed graphical identifier, e.g. a barcode, with a camera. By evaluating this picture the identifier can be easily derived. This solution is especially suitable in case the apparatus implementing the invention is a mobile device separate from the display device.

Favorably, the identifier for the content to be displayed is determined from metadata available for the video content, from an image captured from the video content, or from data provided by a user. Again, in the easiest case the identifier is provided by the user. A more convenient solution, which requires less user input, is to make use of available metadata, e.g. information from electronic program guides or the like. Alternatively, an image of the content is captured with a camera and analyzed to identify the displayed content.

Preferably, information about at least one of age of the display device, environmental conditions, operating settings of the display device, and user preferences are provided to the service provider. The environmental conditions include at least one of lighting conditions and a viewing distance of a user. All these aspects have an influence on how the color is or should be reproduced on the display device. Taking these aspects into account thus leads to a further improved viewing experience.

Advantageously, the solution is offered only to owners of both a specific equipment and a license to use a particular video content. In this way the solution can be used as a unique selling proposition provided by the entertainment service provider to specific device manufacturers and content owners, such as film studios, TV/cinema productions, broadcasters, videogame companies, advertising agencies, etc.

For a better understanding the invention shall now be explained in more detail in the following description with reference to the figures. It is understood that the invention is not limited to this exemplary embodiment and that specified features can also expediently be combined and/or modified without departing from the scope of the present invention as defined in the appended claims.

### BRIEF DESCRIPTION OF THE DRAWINGS

- Fig. 1: schematically shows a method according to the invention for determining operating parameters for a display device,
- Fig. 2: illustrates an apparatus adapted to implement the method of Fig. 1,
- Fig. 3: schematically shows a method according to the invention for providing operating parameters for a display device, and
- Fig. 4: illustrates an apparatus adapted to implement the method of Fig. 3.

### DETAILED DESCRIPTION OF PREFERRED EMBODIMENTS

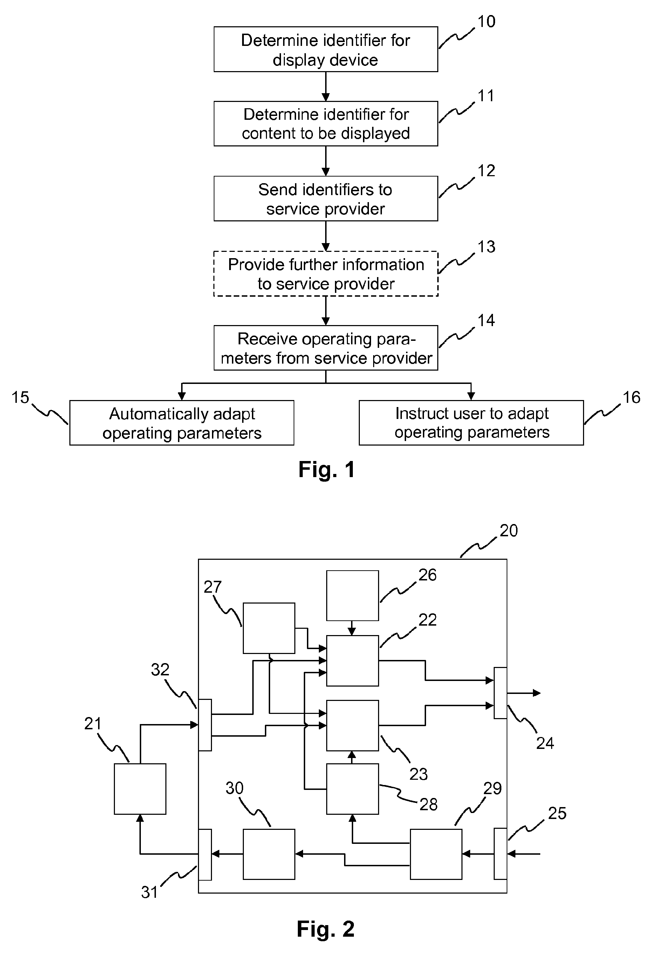

A method according to the invention for determining operating parameters for a display device 21 is schematically shown in Fig. 1. In a first step an identifier for the display device is determined 10. In addition, also an identifier for content to be displayed is determined 11. Both determined identifiers are then sent 12 to a service provider. Optionally, further information, such as information about age of the display device 21, environmental conditions, e.g. colorimetric information on the lighting where the display device is located, operating settings of the display device 21, and user preferences, are provided 13 to the service provider. Responsive to the transmitted data, operating parameters for the display device 21 are received 14 from the service provider. Finally, the operating settings of the display device 21 are automatically adapted 15 or a user is instructed 16 to adapt the operating settings of the display device 21 based on the received operating parameters.

Fig. 2 schematically illustrates an apparatus 20 adapted to implement a solution according to the invention for determining operating parameters for a display device 21. In this figure the apparatus is a dedicated device connected to the display device 21. Of course, it may likewise be included in the display device 21. Also, in case of a dedicated device it is not necessarily connected to the display device 21. The apparatus 20 comprises a display device identification unit 22, which determines 10 an identifier for the display device 21. For this purpose it makes use of information stored in a memory 26 of the apparatus 20 or of information entered by a user via a user interface 28. Alternatively, a camera 27 is used for determining a model ID of the display device 21 or information is received from the display device 21 via an input 32. The apparatus 20 further comprises a content identification unit 23, which determines 11 an identifier for content to be displayed. To this end the content identification unit 23 makes use of information entered by the user via the user interface 28, of information captured with the camera 27, or of information received from the display device 21 via the input 32. The determined identifiers are sent 12 to a service provider via an output 24. In response to the transmitted data, operating parameters for the display device 21 are received 14 from the service provider via an input 25. A processor 29 then instructs 16 the user via the user interface 28 to adapt the operating settings of the display device 21 based on the received operating parameters. Alternatively, the processor instructs a controller 30 to automatically adapt 15 the operating settings of the display device 21 via an output 31. Of course, the different elements of the apparatus 20 may likewise be fully or partially combined into a single unit or implemented as software running on a processor. In addition, the inputs 25, 32 and the outputs 24, 31 may likewise be combined or partially combined into one or more bi-directional interfaces.

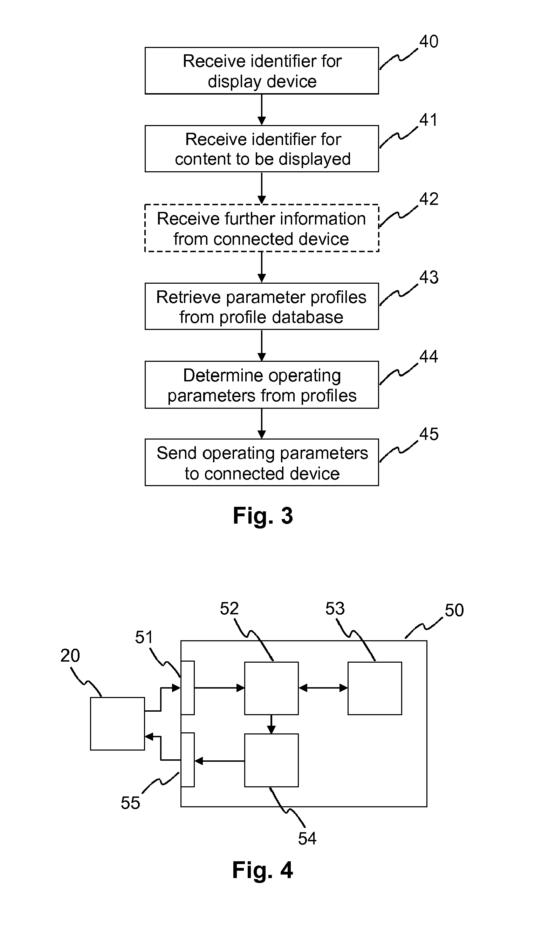

A method according to the invention for providing operating parameters for a display device 21 is schematically shown in Fig. 3. In a first step an identifier for the display device 21 is received 40 from a connected device 20. Also received 41 from the connected device 20 is an identifier for content to be displayed. Optionally, further information is received 42, e.g. information about the age of the display device 21, environmental conditions, operating settings of the display device 21, or user preferences. Based on the identifiers a parameter profile for the display device 21 and a parameter profile for the content to be displayed are retrieved 43 from a profile database 53. These parameter profiles are used for determining 44 operating parameters for the display device 21, which are finally sent 45 to the connected device 20.

Fig. 4 schematically depicts an apparatus 50 configured to provide operating parameters for a display device 21. The apparatus 50 has an input 51 for receiving 40 an identifier for the display device 21 and for receiving 41 an identifier for content to be displayed from a connected device 20. Also further information may be received 42 from the connected device 20. A database interface 52 retrieves 43 a parameter profile for the display device 21 and a parameter profile for the content to be displayed from a profile database 53. The apparatus 50 further has a parameter determining unit 54, which determines 44 operating parameters for the display device 21 from the retrieved parameter profiles. The determined operating parameters are sent 45 to the connected device 20 via an output 55. Of course, the different elements of the apparatus 50 may likewise be fully or partially combined into a single unit or implemented as software running on a processor. In addition, the inputs 51 and the output 55 may likewise be combined into a bi-directional interface.

The solution described in more general terms above can be implemented in a number of different ways. Also, a plurality of advantageous extensions have been developed. Some implementations and extensions shall be described in the following.

According to a first implementation, a software application running on a dedicated device 20, e.g. a portable device such as a smartphone, a tablet or the like, or a stationary device, such as a set-top box or a personal computer, determines both the identifier for the display device 21 as well as the content to be displayed. In the easiest case, the user manually enters the necessary information via a user interface 28. For example, the user selects his display device 21 from a list of supported display devices or enters a model ID of the display device 21. This selection is either permanent, i.e. it is stored in specific user settings for the software application in a memory 26, or it is repeated each time the service is used. Of course, it is likewise possible to use a combination of both approaches, i.e. a permanent selection is superseded by a temporal selection made by the user. Different possibilities are available for determining the content to be displayed. For example, the user enters a title of the content, makes a selection from a list of supported content, or, in case of broadcasted video content, simply specifies the channel he intends to watch. Once the identifiers have been transmitted to the service provider, an application running at the service provider looks up the required operating parameters for the given combination of display device 21 and content, and sends these operating parameters to the software application running on the dedicated device 20. The software application then instructs the user how to set the operating parameters of his display device 21, i.e. which values need to be entered. Alternatively, when a communication between the dedicated device 20 and the display device 21 is possible, either via cable or wireless, the software application automatically at least partially makes the necessary adjustments to the settings of the display device 21.

In a more advanced implementation the dedicated device 20 is equipped with a camera 27. This camera 27 is preferably used for determining the model ID of the display device 21, e.g. by capturing and evaluating data provided on a service label or a barcode affixed to the display device 21. It is likewise possible to transfer evaluation of the captured data to the service provider. In this case simply a captured image is sent to the service provider. This image serves as the device identifier. The camera 27 can additionally be used to identify the video content to be displayed. To this end a snapshot of the displayed video content is taken and evaluated. Preferably, the snapshot is transmitted to the service provider, where a software application compares the image with images stored in a database. Of course, other approaches are conceivable, e.g. capturing and evaluating pictures taken of packaged media or program listings of TV guides. Alternatively, the user may manually enter any data that is missing or select between evaluation results in case evaluation does not yield an unambiguous result.

According to another implementation, the solution is implemented using a software application running on the display device 21. Today more and more television sets are provided with network connectivity and the capability to execute software. This implementation has the advantage that the user only needs to enter a reduced amount of information, as at least the identifier of the display device is readily known to the software application. Depending on the source of the video content, e.g. broadcast via terrestrial, cable, or satellite transmission, internet, external media such as optical discs or hard drives, also the content identifier can be automatically determined by the software application from metadata available for the video content. If this is not the case, the solutions described before for the dedicated device 20 may be used. Furthermore, an automatic adjustment of the display device settings based on the received operating parameters can easily be implemented. In the optimum case the user simply needs to press single button to automatically adapt the display device 21 to content to be displayed, e.g. responsive to a notification by the display device 21 that automatic adaptation is available for the current video content. This indication favorably is a popup on the display screen showing some informative text, e.g. "color correction available for this movie", or a dedicated logo for this service. Preferably, an option to perform automatic adaptation each time such automatic adaptation is available for displayed content can be set by the user in the user settings of the display device 21.

Advantageously, in accordance with a first extension of the solution colorimetric user settings of the display device 21 are taken into account. For this purpose these user settings are preferably notified to the service provider, which in response provides adapted operating parameters. Alternatively, the software application running at the user side adapts the received operating parameters to these user settings. The colorimetric user settings include parameters such as brightness and contrast, which may cause a color drift, as well as color balance and other color profile presets.

Favorably, according to a further extension of the solution aging of the display device 21 is taken into account. With increasing age colorimetric drifts may occur. The evaluation of such drifts may be offered to the device manufacturers as a service. Alternatively, the device manufacturers themselves may evaluate aging and provide the results to the service provider. Again, either the service provider generates adapted operating parameters, or the software application running at the user side adapts the received operating parameters to compensate for aging effects. The age of the display device 21 is either manually specified by the user or determined automatically. For example, it may be at least roughly determined from the model ID. In case also a serial number of the display device 21 is available, a more accurate age can be determined. Preferably, also the total operating time of the display device 21 is considered, as this has an influence on the aging effects.

Advantageously, also environmental conditions, such as lighting conditions or the viewing distance, are considered for the operating parameters. These may be determined using a camera 27 of the display device 21 or the dedicated device 20. The lighting conditions include basic lighting parameters of the viewing environment as well as from behind and/or around the display device. For example, an average reflected color is determined and an estimation of a perceived color temperature is performed. The proximity of the viewers is estimated by identifying the viewers' faces via camera-driven face detection features or by detecting their proximity via infrared illumination. For the latter an infrared illuminator is advantageously provided. Once more, either the service provider generates adapted operating parameters using this information, or the software application running at the user side adapts the received operating parameters to the environmental conditions. Favorably, user preferences are taken into account for the operating parameters. For example, a user might prefer to watch the video content in a more relaxing or goodnight mood, to view a non-corrected version of a documentary, to focus on panoramas, or to play a videogame with a less gloomy atmosphere. It is, of course, likewise possible to provide different sets of operating parameters to the user, among which the user makes a choice.

In summary, some or all of the following metadata are transmitted to the service provider:
- display device model, its intrinsic characteristics and age;
- user settings of the display device, particularly the colorimetric user settings;
- environmental information regarding lighting conditions, e.g. illumination, and ambient geometries, e.g. estimated audience distance;
- full identification of the video content(s) to be displayed;
- user preferences with regard to viewing experience.

In response, the service provider provides a set of operating parameters to the user, which is chosen or generated in accordance with the transmitted metadata. Preferably, calibration profiles are prepared beforehand according to different viewing conditions and stored in databases of calibration profiles. These calibration profiles can be translated into specific technical color profiles (ColorLUT or ICC profile) that take into account all the device-dependent and environment-dependent characteristics indicated above, if any are provided. This allows to counter-balance aging drifts and illuminating environment in order to produce white-balanced and correctly perceived colors. Then, if the content to be displayed is associated with additional looks, the user may further be requested to manually choose a specific look. If only one specific look exists, this can be automatically used. In any case, based on the chosen look another creative color profile is selected, usually a ColorLUT. Subsequently a concatenated profile is computed taking into account both the technical and the creative LUTs. The result is sent to the user as a set of operating parameters.

As the color profiles represent a valuable technological asset, it is desirable to prevent any illegitimate use of the transmitted operating parameters. Therefore, an additional certificate-based technology is advantageously employed, which adds a validation of the profile with the serial number of the final display device. This allows preventing reverse-engineering or 'trimming' of the operating parameters before they ultimately reach the display device.

## Claims

1. A method for determining operating parameters for a display device (21), the method **comprising** the steps of:
- determining (10) an identifier for the display device (21);
- determining (11) an identifier for content to be displayed;
- sending (12) the determined identifiers to a service provider; and
- receiving (14) operating parameters for the display device (21) from the service provider.

2. The method according to claim 1, **further** comprising the step of automatically adapting (15) operating settings of the display device (21) or instructing (16) a user to adapt the operating settings of the display device (21) based on the received operating parameters.

3. The method according to claim 1 or 2, **wherein** the identifier for the display device (21) is determined (10) from a model ID of the display device (21), from a graphical identifier affixed to the display device (21), or from a value specified by a user.

4. The method according to one of the preceding claims, **wherein** the identifier for the content to be displayed is determined (11) from metadata available for the video content, from an image captured from the video content, or from data provided by a user.

5. The method according to one of the preceding claims, **wherein** the operating parameters for the display device (21) are color settings.

6. The method according to one of the preceding claims, **further** comprising the step of providing (13) information to the service provider about at least one of age of the display device (21), environmental conditions, operating settings of the display device (21), and user preferences.

7. The method according to claim 6, **wherein** the environmental conditions include at least one of lighting conditions and a viewing distance of a user.

8. An apparatus (20) configured to determine operating parameters for a display device (21), the apparatus (20) **comprising:**
- a display device identification unit (22) configured to determine (10) an identifier for the display device (21);
- a content identification unit (23) configured to determine (11) an identifier for content to be displayed;
- an output (24) configured to send (12) the determined identifiers to a service provider; and
- an input (25) configured to receive (14) operating parameters for the display device (21) from the service provider.

9. A computer readable storage medium having stored therein instructions enabling determining operating parameters for a display device (21), which, when executed by a computer, cause the computer to:
- determine (10) an identifier for the display device (21);
- determine (11) an identifier for content to be displayed;
- send (12) the determined identifiers to a service provider; and
- receive (14) operating parameters for the display device (21) from the service provider.

10. A method for providing operating parameters for a display device (21), the method **comprising** the steps of:
- receiving (40) an identifier for the display device (21) from a connected device (20);
- receiving (41) an identifier for content to be displayed from the connected device (20);
- retrieving (43) a parameter profile for the display device (21) and a parameter profile for the content to be displayed from a profile database (53);
- determining (44) operating parameters for the display device (21) from the retrieved parameter profiles; and
- sending (45) the determined operating parameters to the connected device (20).

11. The method according to claim 10, **further** comprising the steps of:
- receiving (42) information from the connected device (20) about at least one of age of the display device (21), environmental conditions, operating settings of the display device (21), and user preferences; and
- accounting for the received information when determining (44) the operating parameters for the display device (21).

12. The method according to claim 10 or 11, **wherein** the operating parameters for the display device (21) are color settings.

13. An apparatus (50) configured to provide operating parameters for a display device (21), the apparatus (50) **comprising:**
- an input (51) configured to receive (40) an identifier for the display device (21) and to receive (41) an identifier for content to be displayed from a connected device (20);
- a database interface (52) configured to retrieve (43) a parameter profile for the display device (21) and a parameter profile for the content to be displayed from a profile database (53);
- a parameter determining unit (54) configured to determine (44) operating parameters for the display device (21) from the retrieved parameter profiles; and
- an output (55) configured to send (45) the determined operating parameters to the connected device (20).

14. A computer readable storage medium having stored therein instructions enabling providing operating parameters for a display device (21), which, when executed by a computer, cause the computer to:
- receive (40) an identifier for the display device (21) from a connected device (20);
- receive (41) an identifier for content to be displayed from the connected device (20);
- retrieve (43) a parameter profile for the display device (21) and a parameter profile for the content to be displayed from a profile database (53);
- determine (44) operating parameters for the display device (21) from the retrieved parameter profiles; and
- send (45) the determined operating parameters to the connected device (20).
